# EUROPEAN PATENT SPECIFICATION

(11) **EP 1 087 865 B1**
(45) Date of publication and mention of the grant of the patent: **26.02.2003**
(21) Application number: 99926618.2
(22) Date of filing: 16.06.1999
(51) Int. Cl.: B29C 63/00, F16L 55/165, C08K 5/14

(54) **IMPROVEMENTS RELATING TO LINING METHODS AND MATERIALS**
VERBESSERUNG VON AUSKLEIDUNGSVERFAHREN UND MATERIALIEN DAFÜR
AMELIORATIONS APPORTEES A DES PROCEDES ET A DES MATERIAUX DE REVETEMENT

(30) Priority: 17.06.1998 GB 9812968
(43) Date of publication of application: 04.04.2001
(73) Proprietor: CHANDLER, Brian Burnett, 8933 St Gallen 60 (AT)
(72) Inventor: CHANDLER, Brian Burnett, 8933 St Gallen 60 (AT)
(74) Representative: Denmark, James
(86) International application number: GB9901903
(87) International publication number: WO99065665

(56) References cited:
- EP-A- 0 498 060
- EP-A- 0 856 694
- WO-A-93/15131
- DATABASE WPI Week 9724 Derwent Publications Ltd., London, GB; AN 1997-295010 XP002117151 & JP 09 110949 A (KAYAKU AKZO), 17 October 1995 (1995-10-17)

## Description

This invention relates to lining methods and materials.

The lining methods to which the invention relates are those methods wherein a sheet material is of a nature that it comprises a fibrous body and a curable synthetic resin. The resin soaks or impregnates the body of fibrous material, and in the uncured state of the resin, the sheet material is flexible in nature. The sheet material in the uncured state is shaped to the final shape required, and then a treatment is effected thereon, which causes the resin of the sheet material to harden, with the result that the sheet material becomes hardened to the desired shape.

Lining methods of this type are used extensively in the application of tubular linings to pipes, pipelines and passageways, which are either above ground or are underground. The biggest field of application to my knowledge is in the underground lining of pipes and passageways, especially sewers, using sheet material linings which are in the form of tubes, and in the interests of simplicity, reference is made hereinafter only to such methods and materials, but it is to be understood that the invention has wider application, and can be used where any circumstances as outlined generally in the preceding paragraph prevail.

In the most commonly known method of lining underground passageways, the lining tube is made up of a fibrous body comprising one or more layers of fibrous felt, especially needled felt of polyester fibres. The layer or outer layer has a membrane or coating on the outer surface thereof, and the fibrous body is impregnated with the resin, usually a polyester resin, by pumping the resin into the tube at one end, and by simultaneously feeding the tube through rollers to squeeze the tube and applying a vacuum at the other end, which has the effect of causing the resin to impregnate the fibrous body and to extract air from between the fibres. Once the tube has been so prepared, it is ready for placement in the passageway, and this is done by everting the tube into and along the passageway using fluid pressure, in practice using cold water. When the tube is so placed, the cold water is heated or is replaced by hot water, the heat from the water causing the resin to cure as abovementioned. Eventually, the uncured tube forms a cured, rigid pipe which lines the passageway.

Examples of the above-described method are set forth in US patents Nos. 4009063 and 4064211.

The known method (although extremely successful and widely practised) and the lining tube therefor could I believe be improved in a number of ways.

Firstly, the use of conventional polyester as the resin may present a disadvantage that polyester resin which is currently used requires a styrene monomer catalyst to enable the cure to be effected in a reasonable time, but as soon as the resin and its catalyst are mixed, the amount of time which the installer has before the lining tube has to be installed is severely limited. Once the process has been started therefore, it must be continuous, and if there are any problems, there could be curing before the tube is installed.

Secondly, the currently used polyester resin attracts criticism as to its toxicity, and therefore the use of the known lining tubes has been limited to the lining of sewers and other applications where there is no danger of styrene monomer extraction into food or drinking water. The process has not therefore been acceptable for pipes carrying drinking water.

Thirdly, the present method makes use of a boiler on site for heating the water which serves to cure the resin. This requires the use of large installation equipment which is expensive, and makes the process expensive. The maximum temperature to which the water can be heated is in the region or 100°C, and this limits the type of polyester resin which can be used. It prevents the use of specially formulated resins of this type which require for example cure temperatures of 170°C and above.

Fourthly, the speed of cure of the polyester using hot water is somewhat slow, which also makes the process expensive.

Finally, the actual felt used has a low modulus of elasticity (indicating low strength) and it is always desirable for the cured linings to have as much physical strength as possible, or alternatively achieve the same physical characteristics, but using a thinner sectioned lining tube.

The present invention aims at providing a method of lining passageways wherein, at least in preferred embodiments, all of the above disadvantages will be overcome.

In accordance with the invention, in its most general aspect, there is provided a method of lining a surface wherein a lining sheet is placed on the surface and is cured with laser light energy, and wherein the lining sheet comprises a curable, relatively inert resin requiring a high temperature to cure, which sheet is either
a) transparent to the light energy, but contains matter which reacts to the light energy and is heated up to or to cause generation of said high temperature thereby, in turn to heat the resin and effect its cure; or
b) pigmented so as to react with the laser light to generate such high temperatures to effect the cure.

By "high temperature" is meant a temperature of at least 140°C, and of course there will be a limited extent to which the temperature can rise so as not to destroy the lining sheet.

The said surface is preferably a passageway, particularly an underground passageway, and the sheet is in the form of a tube.

I initially experimented with a phenolic resin, which is relatively inert at low temperatures and will not cure until it is heated to quite a high temperature, for example in the order of 170°C, but when it is heated to such an extent, it cures rapidly, in a matter of seconds, and satisfactory results were obtained.

Later however, I experimented with specially formulated polyester resins sold by Scott Bader under the reference D 3061 UP (which is a development resin), in which the styrene monomer is replaced by a high boiling point monomer, of which an example is that made by AZKO Chemicals and sold by Scott Bader under the designation 1,3 BGDMA. Such a resin system a boiling point of 172 degrees C, and has the desired characteristics, such as requiring activation by the application of high temperature which the laser light in its interaction with the other matter or pigment can produce.

The polyester resin was mixed with two catalysts, namely a first catalyst sold under the name of TRIGANOX 21, which starts to activate at a temperature in the region of 140°C, and a second catalyst sold under the name of TRIGANOX C, which starts to activate at a temperature in the region of 165°C. What happens when the laser light is used to activate the resin is that the light falls on and is absorbed by the fibres and heats same up to 140°C, and then the first catalyst is activated, and its exothermic heat from this reaction activates the second catalyst at 165°C, and this heat then starts the rapid cure of the resin. The exothermic reaction of the resin can produce temperatures of up to 195/200°C, which is beneficial in preventing any water (in a passageway) from affecting the cure of the resin at the surface of the lining sheet. Curing in this way ensures a rapid cure, and also an even cure throughout the thickness of the lining sheet, in that the heat is generated from the inside of the lining, as compared to the hot water method of curing where the heat is applied from one side only, and so the curing is from one side of the lining sheet to the other. The two catalysts interact in a thermal/chemical manner, but the initiation of the reaction is by the heating of the fibres (or the pigment) by the laser light, which penetrates the thickness of the lining sheet. The laser light can be moved over the surface of the lining sheet quite rapidly.

In a specific formulation, the resin contains in the order of 3% of each of the catalysts.

The matter in the lining which reacts with the laser preferably is the fibres. If the fibres are used, it is preferred that these be of appropriate colour, as the colour of the fibres can be material as regards the interaction between the laser light and the fibres. For example, if the fibres or at least some of them are of polyester, which is preferred, and the two catalyst resin system mentioned above is used, it is preferred that they are pre-pigmented a dark colour. Particularly good results are obtained if a combination of polyester and natural fibres is desired, the latter preferably being acetylated. The polyester fibres which usually have a degree of crimp, or could be pre-crimped, give strength to the felt by virtue of the crimp, whilst the natural, acetylated fibres improved the physical properties of the composite when cured.

An alternative or additional approach is to pigment the resin so that it will react with the laser light for the initial generation of the heat.

Alternatively, or in addition, the other matter may comprise or include particles which heat up under the influence of the laser light.

The use of other matter and the use of pigmented resin may be used in combination.

In some cases, the resin may not need a separate catalyst and/or accelerator, which is a considerable advantage, but a catalyst and/or accelerator for example as indicated above, can be used if required

The lining prior to curing is preferably in the nature of a tactile, flexible sheet which has the consistency of leather, so that it can be applied to the surface to be lined easily. To this end the resin may contain a thickening agent, such as aluminium oxide.

Preferably, the lining tube is manufactured by passing a flat sheet of the fibres (preferably a needled felt) through a bath of the resin, whereby the sheet is impregnated, followed drying the resin and forming the sheet into a tube with inner and outer films, thereby producing a handlable tube which is in the nature of a pre preg which can be stored until ready for use.

A "pre-preg" is an expression used in the art to describe a material which comprises or includes a resin which is in effect partially cured or thickened, but requires to be finally cured, before it becomes hard. To achieve the thickening, one would use a substance such as aluminium oxide. A pre-preg has the texture of leather, and so can be shaped to final form before curing. It is distinguished from those materials where the resin content is in a totally uncured state, when the resin is very fluent, almost in the nature of a liquid, and therefore is difficult to handle.

As stated herein, the fibrous sheet material may include, or indeed may comprise completely, natural, acetylated fibres. Natural acetylated fibres of the nature set forth in International Application No. WO 97/19975 are preferred.

The fibres may be orientated to give the tube desired handling and strength characteristics, for example to prevent stretch of the tube when it is being inserted into the passageway by an eversion process.

The tube is preferably formed by wrapping the impregnated sheet around a tubular film such as a polyethylene film, and by forming a seam between overlapping edges of the fibrous sheet. This may be formed by using an ultrasonic device in the form of a needle which cures the resin only along the seam, and is enough to hold the overlapping edges together during the subsequent eversion which takes place during the installation of the tube.

Finally, the outside of the tube is covered with a second film tube structure, which may be made up of two film webs welded together at opposite edges. This tube is to enable eversion using water.

In order to ensure that there is little or no air trapped between in the resulting tube, a vacuum is applied to the inside of the tube at one end thereof, completing the tube which can be stored ready for use.

In an early, specific embodiment of the invention, a felt material made up of acetylated fibres, with the fibres orientated if required, was passed through a warm bath of uncured phenolic resin (for example as sold by Hepworth) in which is contained 8 to 10 parts by weight 10 micron clay particles, and which are coated with cured phenolic resin, which is the same resin as that of the bath.

After passing through the bath, the fibrous body is passed through squeeze rollers to remove excess resin, and then the impregnated body is passed along a hot air tunnel to remove excess water or solvent, depending upon whether or not the phenolic resin is water based or solvent based. This results in the formation of a pre-preg sheet.

On the centre line of the sheet and extending in the length direction is laid a flat film tube, which may be a flat film polyethylene tube, the purpose of which is to protect the lining tube, and to prevent air ingress into the fibrous body during eversion. The inner film tube will eventually become the outer surface of the everted lining tube, and so is should be capable of stretching up to size during the eversion.

The edges of the fibrous body sheet are then overlapped and secured together. The securing together may be by any means, but one method involves the ultrasonic stitching of a seam, which process involves curing the resin along a seam using an ultrasonic needle gun. This securing should be just sufficient to hold the edges together during eversion of the lining tube as it is being installed.

Finally, an outer tube is formed around the fibrous body, and this tube may be formed by two webs of film material joined at two seams, but any method may be adopted for forming a second and outer tube around the fibrous body. The outer film tube should be heat resistant to the heat which will be generated during the curing process (to be described). It should also be capable of either bonding to the cured resin or be capable of being removed after the lining operation has been completed. Polyester based films such as those sold by ICI under the trade name Melanex, or those sold by Du Pont under the name Mylar may be used, as these do actually bond effectively to the phenolic resin when it is cured.

After the outer film tube has been applied, a vacuum is applied to the inside of the outer film to withdraw air from the inside of the lining tube, leaving the tube ready for installation.

In a later alternative arrangement, two coated felts of a combination of polyester fibres and actylated natural fibres are used, and one is placed, for example by eversion, inside another so that the respective coatings are to the inside and outside of the tube. To impregnate such a tube, a slug of the resin is introduced into the tube between the felts where the tubes are held vertically, and again squeeze rollers are used to squeeze out air, to give even impregnation of the felts.

In the installation process with any of the tubes, conventional steps are taken, using a head of water preferably of a substantial size e.g. of the order of 2 metres, and the lining tube is everted into the passageway, the inner tube becoming the outer surface, and the outer film tube becoming the inner surface, in much the same manner as indicated in US patent No. 4009063.

When the lining tube has been thus installed, laser light is used (for example as described in any appropriate one of the methods set forth in International Patent Application No. WO 98/51960) to cure the resin by activating the particles to heat same. The laser light, which passes through the resin and the films strikes the particles and heats them up rapidly to a high temperature in the order of 170°C, and in turn the resin is heated to this temperature. The heating of in this way causes the resin to cure, and the lining tube becomes a rigid lining pipe. The laser light is applied preferably from a diode laser source of for example 110 watts, using fibre optics defining a multiplicity of fibre ends to direct the light energy at the inner surface of the installed lining tube, whilst it is held inflated and in position by the water in the lining tube. The said ends will be in contact with or very close to the lining tube surface. The resin system is transparent to the laser light, but is does fall on and react with the fibres, pigment and/ particles to heat them and or it quickly, and the generated heat causes the reaction which leads to the curing of the resin. The laser light preferably is nanometric light energy of around 700-810 nanometres

The laser light acts to heat the particles/fibres in lining tube quickly (a matter of seconds) up to a curing temperature in the order of 170°C, for example as described herein. It is possible to modify the resin to enhance the speed at which curing will take place so that curing will take place once the this temperature has been reached. This has the curing effect indicated above. Also, the laser light penetrates the entire thickness of the lining tube so the outer surface of the lining (that closer to the surface to be lined) is also cured effectively. Indeed tests have shown that the lining tube at the outer surface (when a specific phenolic resin with no catalyst was used) can be cured with laser light applied at the front even although the rear has a heat sink in the form of cold water is applied thereto.

The fibre optic ends from which the laser light is emitted are pulled through the inflated lining tube and a large number of fibre optic ends giving output of 35 watts may be applied to the inner surface of the lining tube, causing heating of the tube quickly and throughout its thickness. A curing rate of up to 2.5 metres per minute may be achieved, which is much faster than with the conventional method. Curing of linings of a thickness of the order of 15mm can be achieved with ease.

By means of the invention, at least in its preferred form, lining tubes can be stored for a long time, meaning that the disadvantage of the known method is overcome.

In embodiments of the invention, when phenolic resin is used, the method can be used in potable water applications in that phenolic resin is more acceptable than polyester, and is approved for use in drinking water pipes.

There is no need to provide any means for heating the water on site, but only a generator, laser equipment and the fibre optic distributors, and these are reusable.

The preferred use of actylated natural fibres, directionally arranged means that higher physical characteristics can be obtained, as compared to the conventional method, or alternatively, the same physical characteristics can be achieved, but with a lower thickness lining.

The linings are of course made under factory conditions, which means that best quality control can be maintained.

It is to be mentioned that any suitable resin system set forth herein can be used with a fibrous material in the lining tube. The resin may be provided with particles to provide the means with which the laser light reacts in addition to or as an alternative to fibres and/or pigments. Synthetic fibres and/or natural fibres such as jute flax or hemp acetylated or not of any suitable colour (for reaction with the laser light and the brown of jute fibres seems to be particularly suitable) may be used, and any combination of the above fibres may be adopted. Synthetic fibres may be included in any suitable proportion.

The fibres in other cases may be entirely of synthetic type, such as polyester.

It is furthermore to be mentioned that the system is "latent" in that the it will not cure prematurely and the lining sheets and tubes can be stored for some considerable time (test results have shown that the tubes can be stored for six months) before they need to be used.

If desired the resin may include in known manner, a filler material, such as Aluminium Trihydrate to reduce the quantity of resin which needs to be used. Such fillers may include chalk or other particulate material.

A number of tests were carried out using samples of Acetylated Jute fibrous felts of thickness 6 to 8 mm, impregnated with D 3061 UP. These samples were rectangular sheets of approximately 20 cm by 10 cm.

The test results are reproduced below. In all tests a 40 watt diode laser was used and it was located above the sample at a distance of 10 cm, and was held on to allow the sample to come up to temperature, after which the laser was traversed along the sample for the length thereof. The laser light was diffused over an area of the sample of approximately 25 mm square and the laser was traversed over the whole sample, although in some cases the heat of the reaction cured the resin adjacent where the light was falling, depending upon catalyst levels.

In all cases, the curing took place effectively and in a very short time. Placing a metal foil behind the sample (which it was believed would reflect the laser light back into the sample) as provided in the tests done on 21/12/98, did not appear to make much difference.

### Test Results.

- Purpose of Test:: Vary amount of catalyst and observe results
- Summary of results:: Increasing levels of catalyst improves ability to cure

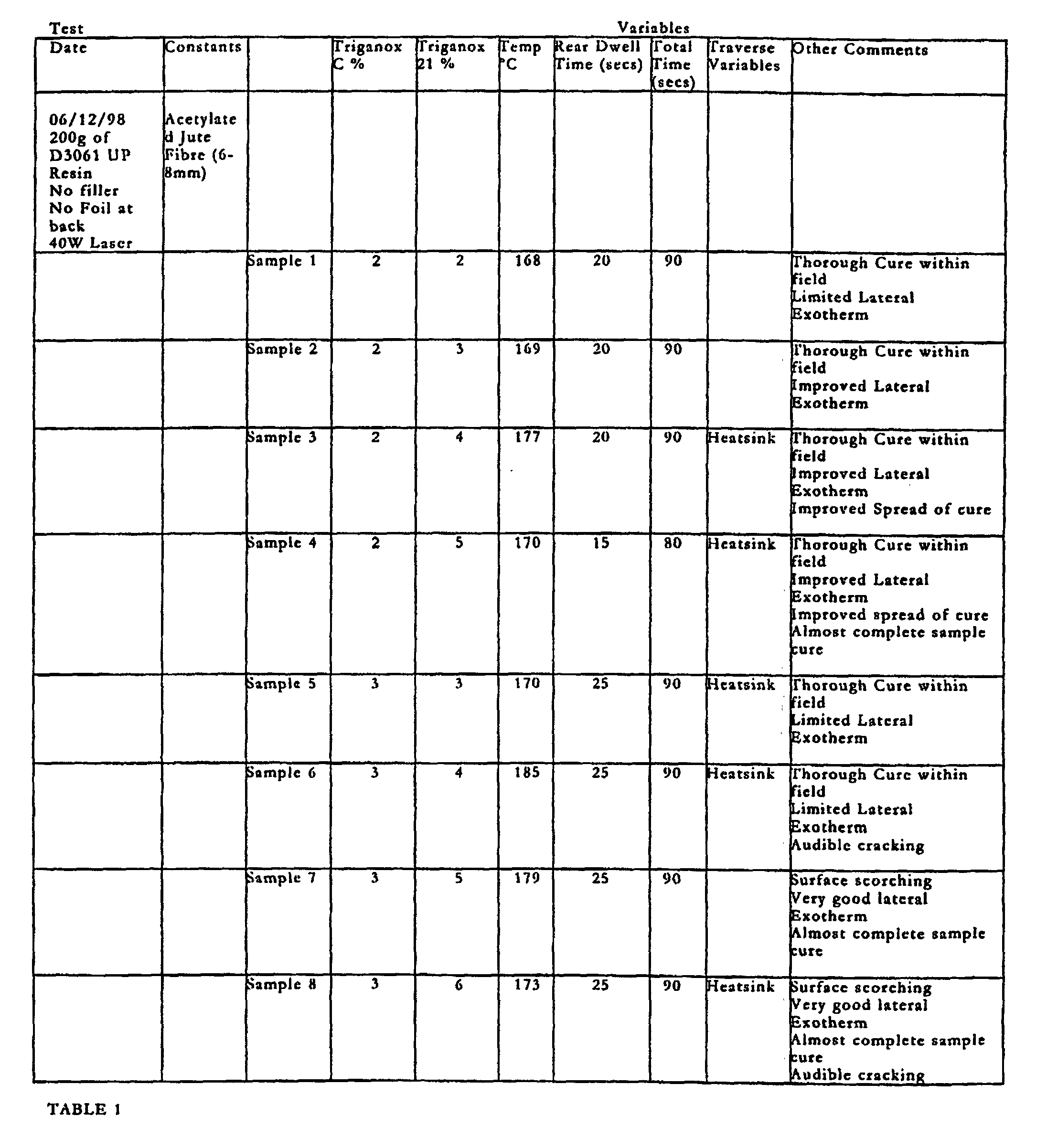

### Test Results.

- Purpose of Test:: Test the effect of foil backing and heatsinks
- Summary of results:: Only minor differences noted in spread of cure

**TABLE 2**

| Test Date | Constants | | Temp at Rear °C | Dwell Time (secs) | Total Traverse Time (secs) | Other Variables | Comments |
|---|---|---|---|---|---|---|---|
| 15/12/98 200g of D3061 UP Resin No filler Triganox C - 2% Triganox 21 - 2% | Acetylated Jute Fibre (6-8mm) | | | | | | |
| | | Sample 1 | 165 | 15 | 90 | | Thorough Cure within field Limited Lateral Exotherm |
| | | Sample 2 | 162 | 20 | 90 | Chilled cast iron mount used as heatsink | Thorough Cure within field |
| | | Sample 3 | 166 | 20 | 90 | Foil at rear | Thorough Cure within field Limited Lateral Exotherm |
| | | Sample 4 | 172 | 15 | 80 | Foil at rear Chilled cast iron mount used as heatsink | Thorough Cure within field Limited Lateral Exotherm |
| | | Sample 5 | 143 | 25 | 90 | Double thickness Jute Fibre | Thorough Cure within field Limited Lateral Exotherm Surface appeared dry Surface scorching |
| | | Sample 6 | 149 | 25 | 90 | Double thickness Jute Fibre Heatsink present | Thorough Cure within field Limited Lateral Exotherm Surface appeared dry |
| | | Sample 7 | 140 | 25 | 90 | Double thickness Jute Fibre Foil at rear | Thorough Cure within field Limited Lateral Exotherm Surface appeared dry Surface scorching |
| | | Sample 8 | 141 | 25 | 90 | Double thickness Jute Fibre Foil at rear Heatsink present | Thorough Cure within field Limited Lateral Exotherm Surface appeared dry Surface scorching |

### Test Results.

- Purpose of Test:: Vary amount of catalyst and observe results
- Summary of results:: Increasing levels of catalyst improves ability to cure

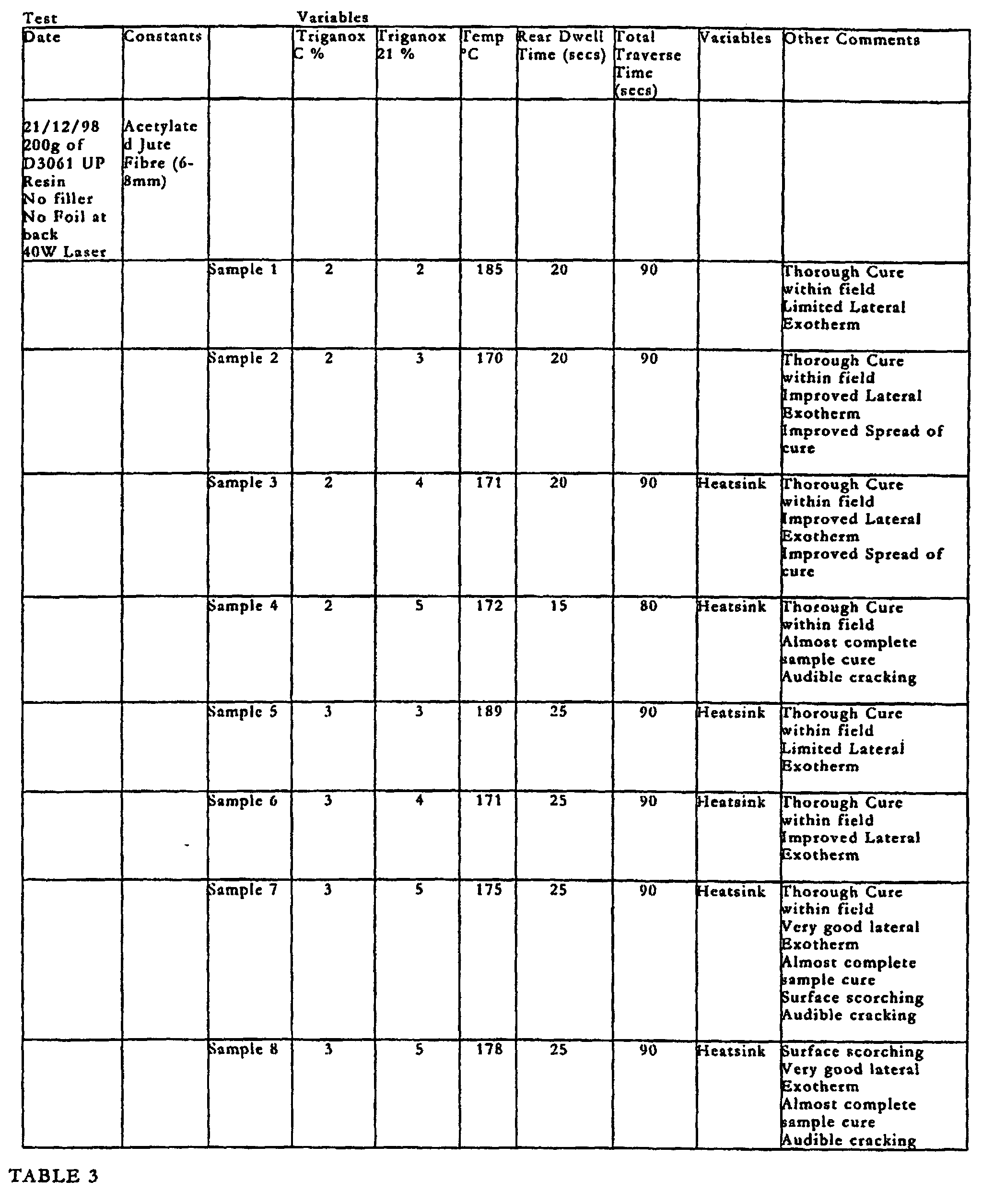

## Claims

1. A method of lining a surface wherein the lining sheet is placed on the surface and is cured with laser light energy, and wherein the lining sheet comprises a relatively inert resin requiring a high temperature to cure, which is either a) transparent to the light energy, but which contains matter which reacts to the light energy and is heated up to said high temperature thereby, in turn to heat the resin and effect its cure; or b) pigmented so as to react with the laser light to generate said high temperature to effect the cure.

2. A method according to claim 1, wherein the surface is a pipeline or passageway and the sheet is in the form of a tube.

3. A method according to claim 2, wherein the relatively inert resin is a phenolic or polyester resin, which, when it is heated to said high temperature, cures rapidly.

4. A method according to claim 3, wherein the resin is a polyester resin, and it contains two catalysts, which respectively are activated at a first high temperature, and a second high temperature which is higher than said first high temperature.

5. A method according to claim 2, 3 or 4, wherein there is other matter, and such matter is the fibres of the sheet material.

6. A method according to claim 5, wherein the fibres are of an appropriate colour to ensure the interaction between the laser light and the fibres.

7. A method according to claim 6, wherein the fibres are previously acetylated and/or are pre-pigmented.

8. A method according to any of claims 2 to 7, wherein the resin is pigmented so as to react with the laser light.

9. A method according to any preceding claim except claim 4 or any other claim when dependent upon claim 4, wherein the resin is devoid of catalyst and/or accelerator.

10. A method according to any one of the preceding claims, wherein the sheet is in the nature of a pre-preg.

11. A method according to any one of the preceding claims, wherein the other matter when provided comprises or includes particles.

12. A method according to claim 11, wherein the particles are coated with a resin to improve the heating up of the particles.

13. A method according to claim 12, wherein the coating is of a resin which is the same as the resin of the sheet.

14. A method according to any preceding claim, wherein the laser light is either applied directly or though fibre optic means.

15. A method according to claim 14, wherein the laser light is applied through a plurality of fibre optic tails, from which the laser light issues, by moving the sheet and the tails one relative to another.

16. A lining sheet for the lining a surface wherein the lining sheet is placed on the passageway surface and is cured with laser light energy, and wherein the lining sheet comprises a relatively inert resin requiring a high temperature to cure, which is either a) transparent to the light energy, but which contains matter which reacts to the light energy and is heated up to said high temperature thereby, in turn to heat the resin and effect its cure; or b) pigmented so as to react with the laser light to generate such high temperatures to effect the cure.

17. A lining sheet according to claim 16, wherein the sheet is in the form of a tube for lining pipelines or passageways

18. A lining sheet according to claim 16, or 17, wherein the sheet is in the form of a pre-preg.

19. A lining sheet according to any of claims 16 to 18, wherein the resin is a polyester, and the resin contains two catalysts, which respectively are activated at a first high temperature, and a second high temperature which is higher than said first high temperature.

## Patentansprüche

1. Verfahren zum Auskleiden einer Oberfläche, wobei die Auskleidungsfolie auf die Oberfläche gelegt und mit Laserlichtenergie vulkanisiert wird und wobei die Auskleidungsfolie einen relativ inerten Harz umfasst, der eine hohe Temperatur zum Vulkanisieren benötigt und der entweder a) für die Lichtenergie transparent ist, aber Materie enthält, die mit der Lichtenergie reagiert und dadurch auf die genannte hohe Temperatur erhitzt wird, um dabei wiederum den Harz zu erhitzen und dessen Vulkanisation zu bewirken; oder b) so pigmentiert ist, dass er mit dem Laserlicht reagiert, um die genannte hohe Temperatur zum Bewirken der Vulkanisation zu erzeugen.

2. Verfahren nach Anspruch 1, bei dem die Oberfläche eine Pipeline oder ein Kanal ist und die Folie die Form einer Röhre hat.

3. Verfahren nach Anspruch 2, bei dem der relativ inerte Harz ein Phenol- oder Polyesterharz ist, der, wenn er auf die genannte hohe Temperatur erhitzt wird, rasch vulkanisiert.

4. Verfahren nach Anspruch 3, bei dem der Harz ein Polyesterharz ist und zwei Katalysatoren hat, die jeweils bei einer ersten hohen Temperatur und bei einer zweiten hohen Temperatur aktiviert werden, die höher ist als die genannte erste hohe Temperatur.

5. Verfahren nach Anspruch 2, 3 oder 4, bei dem weitere Materie vorhanden ist, und diese Materie sind die Fasern des Folienmaterials.

6. Verfahren nach Anspruch 5, bei dem die Fasern von einer geeigneten Farbe sind, um die Interaktion zwischen dem Laserlicht und den Fasern zu gewährleisten.

7. Verfahren nach Anspruch 6, bei dem die Fasern zuvor acetyliert und/oder vorpigmentiert werden.

8. Verfahren nach einem der Ansprüche 2 bis 7, bei dem der Harz so pigmentiert ist, dass er mit dem Laserlicht reagiert.

9. Verfahren nach einem der vorherigen Ansprüche, ausgenommen Anspruch 4 oder eines von Anspruch 4 abhängigen Anspruchs, wobei der Harz weder Katalysator noch Beschleuniger aufweist.

10. Verfahren nach einem der vorherigen Ansprüche, bei dem die Folie die Natur eines Prepreg hat.

11. Verfahren nach einem der vorherigen Ansprüche, bei dem die andere Materie ggf. Partikel umfasst oder beinhaltet.

12. Verfahren nach Anspruch 11, bei dem die Partikel mit einem Harz beschichtet sind, um die Erhitzung der Partikel zu verbessern.

13. Verfahren nach Anspruch 12, bei dem die Beschichtung aus einem Harz besteht, der derselbe ist wie der Harz der Folie.

14. Verfahren nach einem der vorherigen Ansprüche, bei dem das Laserlicht entweder direkt oder durch faseroptische Mittel appliziert wird.

15. Verfahren nach Anspruch 14, bei dem das Laserlicht durch eine Mehrzahl von faseroptischen Schweifen appliziert wird, aus denen das Laserlicht austritt, indem die Folie und die Schweife relativ zueinander bewegt werden.

16. Auskleidungsfolie zum Auskleiden einer Oberfläche, wobei die Auskleidungsfolie auf die Kanaloberfläche gelegt und mit Laserlichtenergie vulkanisiert wird, und wobei die Auskleidungsfolie einen relativ inerten Harz umfasst, der eine hohe Temperatur zum Vulkanisieren benötigt und der entweder a) für die Lichtenergie transparent ist, aber Materie enthält, die mit der Lichtenergie reagiert und dadurch auf die genannte hohe Temperatur erhitzt wird und dabei wiederum den Harz erhitzt und dessen Vulkanisation bewirkt; oder b) so pigmentiert ist, dass er mit dem Laserlicht reagiert, um die genannte hohe Temperatur zum Bewirken der Vulkanisation zu erzeugen.

17. Auskleidungsfolie nach Anspruch 16, bei der die Folie die Form einer Röhre zum Auskleiden von Pipelines oder Kanälen hat.

18. Auskleidungsfolie nach Anspruch 16 oder 17, bei der die Folie die Form eines Prepreg hat.

19. Auskleidungsfolie nach einem der Ansprüche 16 bis 18, wobei der Harz ein Polyester ist und der Harz zwei Katalysatoren beinhaltet, die jeweils bei einer ersten hohen Temperatur und bei einer zweiten hohen Temperatur aktiviert werden, die höher ist als die genannte erste hohe Temperatur.

## Revendications

1. Procédé de revêtement d'une surface dans lequel la feuille de revêtement est placée sur la surface et est durcie avec l'énergie d'une lumière laser, et dans lequel la feuille de revêtement comprend une résine relativement inerte qui nécessite une température élevée pour durcir, laquelle est soit a) transparente à l'énergie de la lumière, mais qui contient une matière qui réagit à l'énergie de la lumière, et est chauffée par celle-ci jusqu'à ladite température élevée, afin de chauffer à son tour la résine et d'effectuer son durcissement ; soit b) pigmentée afin de réagir avec la lumière laser dans le but de générer ladite température élevée permettant d'effectuer le durcissement.

2. Procédé, selon la revendication 1, dans lequel la surface est une conduite ou un passage et la feuille se présente sous la forme d'un tube.

3. Procédé, selon la revendication 2, dans lequel la résine relativement inerte est une résine polyester ou phénolique, laquelle durcit rapidement quand elle est chauffée jusqu'à ladite température élevée.

4. Procédé, selon la revendication 3, dans lequel la résine est une résine polyester, et elle contient deux catalyseurs qui sont respectivement activés à une première température élevée, et à une deuxième température élevée qui est supérieure à ladite première température élevée.

5. Procédé, selon la revendication 2, 3 ou 4 dans lequel une autre matière est présente, et cette matière est constituée des fibres du matériau en feuille.

6. Procédé, selon la revendication 5, dans lequel les fibres ont une couleur appropriée afin d'assurer l'interaction entre la lumière laser et les fibres.

7. Procédé, selon la revendication 6, dans lequel les fibres ont été précédemment acétylées et/ou pré-pigmentées.

8. Procédé, selon l'une quelconque des revendications 2 à 7, dans lequel la résine est pigmentée de façon à réagir avec la lumière laser.

9. Procédé, selon l'une quelconque des revendications précédentes, à l'exception de la revendication 4 ou de toute autre revendication lorsqu'elle dépend de la revendication 4, dans lequel la résine est exempte de catalyseur et/ou d'accélérateur.

10. Procédé, selon l'une quelconque des revendications précédentes, dans lequel la feuille se présente sous la forme d'un préimprégné.

11. Procédé, selon l'une quelconque des revendications précédentes, dans lequel l'autre matière, quand elle est prévue, comporte ou inclut des particules.

12. Procédé, selon la revendication 11, dans lequel les particules sont revêtues d'une résine afin d'améliorer le réchauffage des particules.

13. Procédé, selon la revendication 12, dans lequel le revêtement est constitué d'une résine qui est identique à la résine de la feuille.

14. Procédé, selon l'une quelconque des revendications précédentes, dans lequel la lumière laser est appliquée soit directement, soit par l'intermédiaire d'un moyen à fibres optiques.

15. Procédé, selon la revendication 14, dans lequel la lumière laser est appliquée par l'intermédiaire d'une pluralité d'extrémités de fibres optiques, à partir desquelles la lumière laser provient, en déplaçant la feuille et les extrémités l'une par rapport à l'autre.

16. Feuille de revêtement servant au revêtement d'une surface dans laquelle la feuille de revêtement est placée sur la surface du passage et est durcie à l'aide de l'énergie de la lumière laser, et dans laquelle la feuille de revêtement comprend une résine relativement inerte qui nécessite une température élevée pour durcir, laquelle est soit a) transparente à l'énergie de la lumière, mais qui contient une matière qui réagit à l'énergie de la lumière, et est chauffée par celle-ci jusqu'à ladite température élevée, afin de chauffer à son tour la résine et d'effectuer son durcissement ; soit b) pigmentée afin de réagir avec la lumière laser dans le but de générer la température élevée en question pour effectuer le durcissement.

17. Feuille de revêtement, selon la revendication 16, dans laquelle la feuille se présente sous la forme d'un tube destiné à assurer le revêtement de conduites ou de passages.

18. Feuille de revêtement, selon la revendication 16 ou 17, dans laquelle la feuille se présente sous la forme d'un préimprégné.

19. Feuille de revêtement, selon l'une quelconque des revendications 16 à 18, dans laquelle la résine est un polyester, et la résine contient deux catalyseurs qui sont respectivement activés à une première température élevée, et à une deuxième température élevée qui est supérieure à ladite première température élevée.
